Europäisches Patentamt

European Patent Office

Office européen des brevets

(11) Veröffentlichungsnummer: **0 388 785**
**A2**

# (12) EUROPÄISCHE PATENTANMELDUNG

(21) Anmeldenummer: **90104881.9**

(22) Anmeldetag: **15.03.90**

(51) Int. Cl.⁵: **G06K 19/02, G06K 7/12, B07C 5/34**

(30) Priorität: **21.03.89 DE 3909237**

(43) Veröffentlichungstag der Anmeldung:
**26.09.90 Patentblatt 90/39**

(84) Benannte Vertragsstaaten:
**AT BE CH DE FR GB LI LU NL**

(71) Anmelder: **KAUTEX WERKE REINOLD HAGEN AG**

**D-5300 Bonn 3(DE)**

(72) Erfinder: **Holzmann, Rainer, Dipl.-Ing.**
**Siebengebirgsstrasse 122**
**D-5300 Bonn 3(DE)**

(74) Vertreter: **Koepsell, Helmut, Dipl.-Ing.**
**Mittelstrasse 7**
**D-5000 Köln 1(DE)**

(54) Verfahren zum Identifizieren von Verpackungen und/oder von zu ihrer Herstellung verwendeten Werkstoffen.

(57) Die Erfindung betrifft ein Verfahren zum Identifizieren von Verpackungen und/oder von sie bildenden Werkstoffen. Zu diesem Zweck wird die Verpackung mit einer ihr und/oder einem bestimmten Werkstoff zugeordneten Kennzeichnung versehen, die unter normalen Bedingungen nicht wahrnehmbar ist, jedoch durch Einwirkung physikalischer und/oder chemischer Mittel erkennbar gemacht werden kann und auf von außen zugänglichen Bereichen der Verpackung großflächig aufgebracht ist, so daß unabhängig von der Position, die die Verpackung im Einwirkungsbereich der physikalischen und/oder chemischen Mittel relativ zu diesen einnimmt, wenigstens ein Teilbereich der Kennzeichnung von dem physikalischen und/oder chemischen Mittel beaufschlagt oder von einem Lesegerät erfaßt und durch das physikalische und/oder chemische Mittel eine von außen wahrnehmbare Veränderung des Aussehens der Verpackung bewirkt wird, die als Code für die Identifizierung des Werkstoffes dient.

## Verfahren zum Identifizieren von Verpackungen und/oder von zu ihrer Herstellung verwendeten Werkstoffen

Die Erfindung betrifft ein Verfahren zum Identifizieren von Verpackungen und/oder den darin verwendeten Werkstoffen und/oder den Einsatzbereichen der Verpackungen sowie eine zur Anwendung dieses Verfahrens vorbereitete Verpackung.

Die starke Zunahme von Müll, insbesondere Hausmüll, bereitet erhebliche Probleme, da die anfallenden Mengen unter Anwendung herkömmlicher Verfahren und Einrichtungen kaum noch zu entsorgen sind. Ein großer Teil des Mülls geht auf Verpackungsmaterial zurück, dessen zunehmende Verwendung unter anderem auf die heute üblichen Vertriebsformen, beispielsweise Selbstbedienung, aber auch darauf zurückzuführen ist, daß dem Verbraucher die Waren in einer Weise zur Verfügung gestellt werden, die deren Gebrauch und Handhabung erleichtert. Hinzu kommt, daß Verpackungen durch entsprechende Gestaltung in immer stärkerem Maße auch dazu benutzt werden, die in ihnen verpackten Waren in einer gefälligen, den Käufer ansprechenden Form darzubieten.

In Anbetracht der zunehmenden Schwierigkeiten bei der Beseitigung dieser nach der Benutzung überwiegend in den Müll gelangenden Verpackungen und auch in Anbetracht des gestiegenen Umweltbewußtseins wird angestrebt, die Verpackungen nach Gebrauch wieder einer wirtschaftlichen Verwendung zuzuführen. Dabei geht es einmal darum, die für die Beseitigung des Mülls notwendigen Aufwendungen zu verringern. Ein zusätzlicher Vorteil wird aber auch darin gesehen, daß die natürlichen, endlichen Ressourcen weniger stark beansprucht werden.

Bei Glas, insbesondere Glasflaschen, ist bereits ein wesentlicher Fortschritt in dieser Richtung erreicht worden, da die Letztverbraucher angehalten werden, Glasflaschen nach ihrer bestimmungsgemäßen Verwendung getrennt vom üblichen Hausmüll zu sammeln. Dies hat dazu geführt, daß heute bereits ein wesentlicher Teil der Glaserzeugung und damit auch der Herstellung von Glasflaschen unter Verwendung dieser rückgeführten Flaschen erfolgt.

Zweifellos beruht das gute Ergebnis bei den Bemühungen um eine Rückführung von Leergut bei Glasflaschen im wesentlichen auch darauf, daß deren Aufarbeitung für die Wiederverwendung keine großen Schwierigkeiten bereitet, da die auf dem Verpackungsgebiet benutzten Gläser bezüglich ihrer chemischen Zusammensetzung keine großen Unterschiede aufweisen.

Ein großer Teil des heute anfallenden, auf Verpackungen zurückgehenden Mülls besteht jedoch aus anderen Materialien, insbesondere organischen Kunststoffen, aber auch aus Kartonagen und zumindest einseitig mit Kunststoff kaschierten Kartonagen. Insbesondere die Verpackungszwecken dienenden Flaschen und ähnlichen Behälter aus organischen Kunststoffen bilden einen großen Teil des Mülls, so daß eine irgendwie geartete Rückführung dieser Kunststoffverpackungen aber auch ggf. der Kartonagen mit und ohne Kaschierung eine erhebliche Entlastung und/oder Vereinfachung der Müllentsorgung zur Folge hätte. Dazu wäre es nicht einmal erforderlich, daß diese Kunststoffe einer Wiederverwendung in dem Sinne zugeführt werden, daß sie erneut zu Verpackungen - oder anderen Gebrauchsgegenständen - verarbeitet werden. Es würde bereits eine wesentliche Verbesserung der derzeitigen Situation bewirken, wenn es möglich wäre, den gesamten Abfall, der auf Verpackungen aus Kunststoff und/oder Kartonagen zurückgeht, zur Wärmegewinnung zu verbrennen. Aufgrund des großen spezifischen Energieinhaltes der meisten organischen Kunststoffe wäre es z. B. ohne weiteres möglich, ein Kraftwerk ganz oder überwiegend mit Abfällen aus Kunststoff zu betreiben. Dies würde auch keine Verschwendung von Ressourcen bedeuten, da zur Herstellung der meisten Kunststoffe Erdölprodukte verwendet werden, so daß die Verwertung der Kunststoffabfälle durch Verbrennen als eine der üblichen Verwendungen von Erdölprodukten angesehen werden könnte, wobei vor der Nutzbarmachung des Energieinhaltes zur Wärmegewinnung noch eine zusätzliche Verwendung als Gebrauchsgegenstand, nämlich in Form eines Kunststoffproduktes, zwischengeschaltet wäre.

Es sind zwar Anlagen zum Verbrennen von Müll im Einsatz, der möglicherweise auch Kunststoffabfälle und Kartonagen, insbesondere verbrauchte Verpackungen, enthält. Hierbei stellen jedoch diese Verpackungen lediglich eine von mehreren Komponenten des Mülls dar, so daß eine optimale Nutzung nicht ohne weiteres möglich ist. Schwerwiegender dürfte jedoch die Tatsache sein, daß die Zusammensetzung des in derartigen Anlagen zu verbrennenden Mülls nicht immer genau bestimmbar ist. Dies kann zur Folge haben, daß in den Rauchgasen derartiger Müllverbrennungsanlagen die Umwelt beeinträchtigende Substanzen enthalten sind. Aus diesem Grunde stoßen Bau und Betrieb von Müllverbrennungsanlagen heute zunehmend auf Bedenken und Ablehnung.

Eine wirtschaftliche und umweltfreundliche Verwertung der Abfälle aus organischem Kunststoff ist im wesentlichen bisher daran gescheitert, daß - im Gegensatz zur Situation bei Glasbehältern - eine Vielzahl von organischen Kunststoffen auch für Verpackungszwecke in Gebrauch ist. Die chemischen Zusammensetzungen und physikalischen Eigenschaften dieser Kunststoffe sind so unterschiedlich, daß sie nicht gemeinsam wiederverwertet werden können. Eine derartige Wiederverwertung im Sinne einer Wiederverarbeitung zur Herstellung irgendwelcher Gebrauchsgegenstände, bei denen es sich ggf. wieder um Verpackungen handeln kann, setzt voraus, daß die Gesamtmenge an Verpackungen aus Kunststoff und/oder anderen Verpackungsmaterialien nach den Werkstoffen, aus denen sie bestehen, sortiert werden, so daß dann die resultierenden Teilmengen die von Verpackungen aus gleicher oder miteinander kompatiblen Materialien gebildet werden, getrennt von den aus anderen Werkstoffen bestehenden Verpackungen wiederverwertet werden können. Zwar müßte es möglich sein, beispielsweise Kunststoffflaschen, die einen wesentlichen Teil des Hausmülls bilden, durch Klassiervorgänge z. B. aus dem Hausmüll abzutrennen. Dies führt jedoch zu keinem brauchbaren Ergebnis, da, wie bereits erläutert, für die Herstellung von Flaschen und anderen Verpackungen viele unterschiedliche Kunststoffe verwendet werden, die nicht oder nur in ganz beschränktem Umfang gemeinsam wiederverwertet werden können.

Dies gilt sogar dann, wenn die Nutzung der Kunststoffabfälle und/oder Kartonagen durch Verbrennen derselben geschehen soll. Für bestimmte Kunststoffe - beispielsweise PVC - müssen aufgrund ihrer chemischen Zusammensetzung beim Verbrennen besondere Vorkehrungen getroffen werden, um das Entstehen von schädlichen, z. B. korrosiven Bestandteilen in den Rauchgasen zu vermeiden oder deren Vorhandensein zu berücksichtigen. Zwar wird es möglich sein, eine gemeinsame Verbrennung von Kunststoffen unterschiedlicher chemischer Zusammensetzung durchzuführen, ohne daß die in die Atmosphäre abgegebenen Rauchgase Substanzen enthalten, die umweltbeeinträchtigend und/oder korrosiv sind. Jedoch setzt dies besondere Vorkehrungen bezüglich Beschaffenheit des Kessels und Führung des Verbrennungsvorganges und Behandlung der Rauchgase voraus, die zwangsläufig zu Mehrkosten führen. Hinzu kommt, daß bei Verwendung einer nicht definierbaren Mischung von Kunststoffabfällen selbst bei Kontrolle des Gewichtes derselben auch der Energieinhalt pro Volumeneinheit der in die Feuerung gegebenen Abfälle nicht definierbar wäre, so daß der Betrieb eines Kessels auch dadurch zusätzlich kompliziert würde. Jedenfalls kann bei besserer Kenntnis und Beeinflußbarkeit der Zusammensetzung der zu verbrennenden Materialien der Verbrennungsvorgang in jeder Hinsicht leichter optimiert werden.

Demzufolge liegt der Erfindung die Aufgabe zugrunde, ein Verfahren verfügbar zu machen, welches es erlaubt, Abfälle, die auf Verpackungen zurückgehen, hinsichtlich der Beschaffenheit und der Werkstoffe, aus denen sie bestehen, ggf. aber auch hinsichtlich ihres Einsatzbereiches, identifizierbar zu machen. Dabei soll es möglich sein, die Identifizierung auch unter Bedingungen vorzunehmen, wie sie im allgemeinen bei der Förderung von Massengütern. z. B. auf einem Förderband oder einem ähnlichen Fördermittel vorhanden sind, auf welchem von Verpackungsmitteln stammende Abfälle, beispielsweise in Form von Flaschen, in großen Mengen, praktisch als Schüttgut, ungeordnet und unausgerichtet transportiert werden. In Abhängigkeit von der für die Identifizierung benutzten Verfahren kann es dabei erforderlich sein, daß die verbrauchten Verpackungen oder Teile derselben nicht derart übereinander liegend angeordnet sind, daß die unten befindlichen Verpackungen oder Verpackungsteile durch darüber befindliche Körper, Teile usw. vollständig abgedeckt werden. Andererseits soll es ausreichen, daß nur Teilbereiche der Verpackung oder der Verpackungsteile zugänglich sind derart, daß sie von einer Position oberhalb des sie aufnehmenden Förderbandes oder einer anderen sie tragenden Stützfläche wahrnehmbar sind in dem Sinne, daß zumindest Teilbereiche ihrer Oberfläche für oberhalb und/oder unterhalb der sie tragenden Stützfläche befindliche physikalische Emissionsquellen zugänglich sind und/oder sich im Erfassungsbereich von Geräten zur Identifizierung der Verpackungen befinden. Im wesentlichen kann diese Voraussetzung darauf hinauslaufen, daß die Kunststoffabfälle überwiegend oder im wesentlichen auf dem sie tragenden Förderband oder einer anderen Tragfläche einlagig angeordnet sind, so daß nicht zwei oder mehr Teile aufeinanderliegen und die oberen Teile die darunter liegenden Teile vollständig abdecken.

Zur Lösung dieser Aufgabe schlägt die Erfindung vor, die Verpackung mit wenigstens einer ihr und/oder einem bestimmten Werkstoff oder einer Kombination von Werkstoffen zugeordneten Kennzeichnung zu versehen, die unter normalen Bedingungen nicht wahrnehmbar ist, jedoch durch Einwirkung physikalischer und/oder chemischer Mittel erkennbar gemacht werden kann und auf den von außen zugänglichen Bereichen der Verpackung so aufgebracht wird, daß unabhängig von der Position, die die Verpackung im Einwirkungsbereich der physikalischen und/oder chemischen Mittel relativ zu diesen einnimmt, wenigstens ein Teilbereich der Kennzeichnung von den physikalischen und/oder chemischen Mitteln beaufschlagt und/oder von einem Gerät zum Identifizieren erfaßt und durch die Beaufschlagung eine von außen wahrnehmbare Änderung des Aussehens der Verpackung bewirkt wird, anhand welcher das die Verpackung und/oder das sie bildende Material identifizierbar sind. Da die meisten Verpackungen mit einer Dekoration beispielsweise in Form von Etiketten, Aufdrucken oder dgl. versehen sind, ist es ohne weiteres möglich, die Kennzeichnung gemäß der Erfindung im Zuge des Dekoriervorganges anzubringen. Dies kann beispielsweise durch einen besonderen Druckvorgang erfolgen. Es ist aber auch möglich, Etiketten, die an der Verpackung angebracht werden, mit einer derartigen Kennzeichnung zu versehen, so daß mit dem Etikett gleichzeitig auch die Kennzeichnung oder zumindest Teilbereiche derselben an der Verpackung angebracht werden. Wie im einzelnen verfahren wird, hängt von den jeweiligen Umständen ab. Voraussetzung ist, daß die Kennzeichnung auf dem größten Teil der von außen zugänglichen bzw. sichtbaren Oberfläche der Verpackung, und zwar unabhängig davon, ob sie mit einer Dekoration versehen ist oder nicht, vorhanden ist. Es ist natürlich auch möglich, die Kennzeichnung unabhängig vom Dekorieren der Verpackung anzubringen. Entscheidend ist lediglich, daß, wenn die Verpackung zum Verbraucher kommt, sie die Kennzeichnung trägt und somit, nachdem sie in den Müll gelangt ist, unter den genannten Voraussetzungen identifiziert werden kann.

Die Erfindung geht aus von der Überlegung, daß es nicht möglich ist, durch Einfärben des Verpackungsmaterials oder Verwendung einer bestimmten Form für die Verpackung letztere und/oder den Werkstoff oder die Werkstoffkombination, aus dem bzw. der sie besteht, kenntlich zu machen, da dadurch die Möglichkeiten bezüglich Auswahl von Farben und Formen bei der Gestaltung von Verpackungen zu stark eingeschränkt würden. Andererseits ist es auch nicht möglich, die Kennzeichnung in Form einer Markierung auszuführen, die sich nur über eine kleine Fläche erstreckt und zudem, wenn sie unter normalen Umständen sichtbar wäre, in einem Bereich angebracht wäre, in welchem eine solche Markierung nicht stören würde. Dafür käme praktisch nur der Boden einer Flasche oder eine entsprechende Fläche einer anderen Verpackung in Betracht. Zwar ist es ohne weiteres möglich, eine derartige Markierung an einer Verpackung anzubringen, wobei sie ggf. sogar in dem heute üblichen Code, der den Inhalt der Verpackung kennzeichnet, unterzubringen wäre. Die Verwendung einer solchen kleinflächigen Kennzeichnung würde jedoch voraussetzen, daß die damit versehenen Verpackungen geordnet und jeweils in einer bestimmten relativen Position zu einem Gerät zur Identifizierung, z. B. einem Lesegerät, an diesem vorbeigeführt würden. An dieser Voraussetzung würde es bei der Aufbereitung von Müll selbst dann fehlen, wenn dieser ausschließlich aus Kunststoffmaterialien bestünde. Dies würde auch gelten, wenn es sich bei dem zu sortierenden Material ausschließlich um Kunststoffflaschen handelte, da diese in so großen Mengen und so unterschiedlichen Größen und Formen anfallen, daß sie nur als Schüttgut, also beispielsweise auf einem Förderband als Schüttgutstrom, transportiert werden könnten. Die Erfindung will erreichen, daß die Verpackungen auch unter diesen Bedingungen identifiziert werden können. Dies setzt voraus, daß die Markierung auf der gesamten äußeren Oberfläche der Verpackung oder zumindest dem größten Teil derselben angebracht ist, so daß auch beispielsweise innerhalb eines Schüttgutstromes - zumindest bei einlagiger Anordnung der Bestandteile desselben - diese Markierung von Geräten erfaßt werden kann, die nur grob auf den Schüttgutstrom, jedoch nicht auf die einzelne Verpackung oder gar einen kleinen Teilbereich derselben ausgerichtet sind.

Auf der anderen Seite ist es jedoch nicht möglich, eine derartige Markierung so anzubringen, daß sie das Aussehen der Verpackung bei deren bestimmungsgemäßen Verwendung beeinflußt oder gar beeinträchtigt. Daraus ergibt sich das Erfordernis, die aus den bereits erläuterten Gründen in jedem Fall großflächig anzubringende Kennzeichnung oder Markierung so auszubilden, daß sie bei normalem Gebrauch der Verpackung jedenfalls insoweit nicht sichtbar ist, daß deren Aussehen nicht beeinflußt wird. Dies setzt voraus, daß besondere Kennzeichnungs- bzw. Markierungs mittel verwendet werden, die nur unter der Einwirkung bestimmter physikalischer und/oder chemischer Einflüsse sichtbar werden, die unter normalen Umständen, also im Rahmen des üblichen Gebrauchs der Verpackung, nicht wirksam werden.

Derartige unter normalen Bedingungen visuell nicht wahrnehmbare Substanzen, die jedoch unter der Einwirkung bestimmter Einflüsse oder Mittel sichtbar gemacht werden und/oder eine Veränderung des Aussehens der Verpackung bewirken, sind ohne weiteres verfügbar. So sieht die Erfindung die Möglichkeit vor, daß zur Herstellung der Kennzeichnung bzw. Markierung lumineszierende Substanzen auf der von außen zugänglichen Oberfläche der Verpackung aufgebracht werden, die unter der Einwirkung von geeigneten Strahlen mit geeigneter Wellenlänge eine Änderung des Aussehens der Verpackung bewirken. Es reicht aus, diese lumineszierenden Substanzen in sehr kleinen Mengen auf der von außen zugänglichen Oberfläche der Verpackung anzubringen und die zum Identifizieren des die Packung bildenden Materials oder der die Packung bildenden Materialkombination die mit einer derartigen Kennzeichnung versehene Verpackung der Einwirkung beispielsweise von UV-Strahlen auszusetzen, die eine bestimmte Verfärbung der Verpackung bewirken. Dabei ist es möglich, durch entsprechende Auswahl der lumineszierenden, d. h. fluoreszierenden oder phosphoreszierenden Leuchtpigmente unterschiedliche Farben unter der Einwirkung einer entsprechend auszuwählenden Bestrahlung entstehen zu lassen, anhand welcher die jeweiligen Verpackungen und/oder Werkstoffe identifiziert werden können. Voraussetzung ist dabei lediglich, daß einem bestimmten Werkstoff bzw. einer bestimmten Werkstoffkombination eine bestimmte Farbe zugeordnet ist. Der entscheidende Vorteil besteht darin, daß aufgrund des großflächigen Aufbringens der Markierung auf der Verpackung die Möglichkeit besteht, einen aus einer Vielzahl von Verpackungen, beispielsweise Kunststofflaschen, bestehenden Förderstrom unter entsprechende Strahlen abgebenden Einrichtungen hindurchzuführen, so daß die einzelnen Bestandteile des Förderstromes, also beispielsweise die vorerwähnten Flaschen, in Abhängigkeit von der eintretenden Verfärbung sortiert werden können. Dies kann manuell, aber bei Einsatz geeigneter Geräte auch mechanisch erfolgen, beispielsweise derart, daß die durch die Bestrahlung bewirkte Färbung einer bestimmten Verpackung durch ein Lesegerät erfaßt wird, welches geeignete Geräte steuert, durch die die jeweilige Verpackung aus dem Förderstrom aussortiert wird. Einrichtungen dieser Art sind auf dem Markt, so daß sie nicht näher beschrieben zu werden brauchen.

Ein wesentlicher Vorteil des Identifizierens bzw. Sortierens der Verpackungen unter Verwendung von lumineszierenden Substanzen besteht darin, daß es ausreicht, diese Substanzen in außerordentlich kleinen Mengen aufzubringen, um den gewünschten Effekt zu erreichen. So besteht die Möglichkeit, die lumineszierenden Substanzen in einer dünnen Materialschicht unterzubringen, die außenseitig auf der mit der Kennzeichnung zu versehenden Verpackung aufgebracht wird. Diese Schicht, deren Dicke ggf. nur einige hundertstel Millimeter betragen kann, braucht nicht mehr als beispielsweise 0,01 - 0,001 Gew.-% dieser lumineszierenden Substanzen zu enthalten, um den gewünschten Effekt zu erreichen. Die Auswahl der zu verwendenden Strahlen, z. B. Röntgenstrahlen, Elektronenstrahlen, Infrarotstrahlen usw., richten sich nach den zugegebenen lumineszierenden Substanzen, d. h. den physikalischen Effekten, die die Lumineszenz bewirken.

Der Materialaufwand für die Anbringung der Markierung ist somit in jedem Fall außerordentlich gering, so daß er zu keiner merklichen Verteuerung der so gekennzeichneten Verpackungen führt.

Eine andere Möglichkeit zur Durchführung des Verfahrens gemäß der Erfindung besteht darin, daß die Herstellung der eine Identifizierung der Verpak-

kung nach den Werkstoffen oder Werkstoffkombinationen, aus denen sie bestehen, ermöglichende Kodierung oder Kennzeichnung dadurch erfolgt, daß auf den von außen zugänglichen Oberflächen der Verpackung Substanzen aufgebracht werden, die unter der Einwirkung von chemischen Reagenzien um gesetzt werden und so eine Änderung des Aussehens der Verpackung, beispielsweise eine Änderung der Farbe derselben, bewirken. Auch dies kann in der Weise geschehen, daß die zur Kennzeichnung dienende Substanz aus wenigstens einer außenseitig auf der Verpackung aufgebrachten dünnen Schicht besteht. Es ist möglich, diese Substanzen so auszuwählen, daß sie bei normalem Gebrauch und normaler Handhabung der Packung keinerlei Umsetzung erfährt. Diese kann jedoch dadurch herbeigeführt werden, daß der aus den Verpackungen, z. B. aus Kunststofflaschen, bestehende Massegutstrom durch ein Chemikalienbad geführt wird, welches die eine bestimmte Färbung verursachende Umsetzung bewirkt. Dabei wird es möglich sein, die der Kennzeichnung dienenden Substanzen so auszuwählen, daß sie bei der Umsetzung mit derselben Reagenz unterschiedliche Farben annehmen, von denen jeweils eine einem bestimmten Werkstoff oder einer bestimmten Werkstoffkombination zugeordnet ist. Auch hier kann die Substanz, die der Kennzeichnung dient, in einer außerordentlich dünnen Schicht aufgebracht werden, so daß die Materialkosten auch in diesem Fall zu keiner merklichen Verteuerung der Verpackung zu führen brauchen.

In beiden Fällen, d. h. bei Verwendung lumineszierender Substanzen oder bei Verwendung von Reagenzien, die unter der Einwirkung von chemisch wirksamen Substanzen umgesetzt werden, besteht ohne weiteres die Möglichkeit, die der Kennzeichnung dienenden Substanzen in Form von Zeichen oder eines Musters auf einer von außen zugänglichen Oberfläche der Verpackung aufzubringen. Dies hat den Vorteil, daß die Ausgestaltung des Musters als Identifizierungsmerkmal, also als Code, verwendet werden kann. Ggf. sind auch Kombinationen zwischen Farbe einerseits und Form des Musters andererseits denkbar, um, falls dies erforderlich ist, eine möglichst große Anzahl von unterschiedlichen Identifikationsmerkmalen zu erhalten.

Bei Verwendung von Zeichen und/oder Mustern ist es möglich, bestimmte Zeichen, z. B. Kreuze oder Kreise, in bestimmten Anordnungen auf der Flasche anzubringen, also beispielsweise große Kreuze oder Kreise durch eine Vielzahl kleiner Kreuze und/oder Kreise zu bilden. Auf diese Weise ist es selbst dann, wenn auf die Verwendung oder Auswertung unterschiedlicher Farben verzichtet wird, möglich, soviel Codes zu verwenden, daß praktisch alle nur denkbaren Informationen, an denen bei der Verwertung der Verpackungen ein Interesse bestehen kann, unterzubringen sind.

Im Falle des Aufbringens einer durchgehenden Schicht kann dies bei Flaschen und ähnlichen Behältern, die überwiegend im Extrusions-Blasverfahren hergestellt werden, durch Ko-Extrusion erfolgen. Es ist aber auch möglich, die der Kennzeichnung dienenden Substanzen durch Druckverfahren, Laser oder im sogenannten Ink-Jet-Verfahren aufzubringen. Letzteres eignet sich insbesondere für das Aufbringen der Substanzen in Form von Zeichen oder eines bestimmten Musters, bei welcher die der Kennzeichnung dienende Schicht unterbrochen ist.

Die Anwendbarkeit des Verfahrens gemäß der Erfindung wird durch die Vielzahl der Verpackungswerkstoffe, die heute auf dem Markt sind, nicht wesentlich erschwert, ·da beispielsweise bei Flaschen und ähnlichen Behältern, die aus organischen Kunststoffen bestehen, etwa 80 % dieser Behälter aus vier bis sechs organischen Kunststoffen oder Kunststoffgruppen hergestellt werden. Es ist ohne weiteres möglich, Kennzeichnungssubstanzen und die zu ihrer Sichtbarmachung erforderlichen Einrichtungen bzw. Reagenzien zu verwenden, die das Entstehen von sechs voneinander unterscheidbaren Farben auf der Außenfläche des Behälters bewirken. Dies würde ausreichen, etwa 80 % aller Kunststoffflaschen aus dem Müll auszusortieren und darüber hinaus diese aussortierten 80 % noch einmal in Abhängigkeit vom Werkstoff, aus dem sie bestehen, zu sortieren. Zweifellos würde es einen außerordentlichen Fortschritt darstellen, wenn beispielsweise 80 % aller im Müll befindlichen Kunststoffflaschen aussortiert und einer wirtschaftlichen Wiederverwertung zugeführt werden könnten. Die Wiederverwertung kann ggf. auch darin bestehen, daß die Verpackungen als solche, also ohne zwischengeschaltete Verarbeitung, erneut benutzt werden. Auch hierzu kann das erfindungsgemäße Verfahren nützlich sein, da es bei dieser Art der Rückführung erforderlich sein kann, weitere Informationen, beispielsweise bezüglich des Füllgutes, das in der Verpackung war, zur Verfügung zu haben, weil in vielen Fällen Verpackungen nach einmaliger Verwendung für ein bestimmtes Füllgut oder eine bestimmte Gruppe von Füllgütern zum Abfüllen anderer Füllgüter oder Gruppen von Füllgütern nicht mehr benutzt werden dürfen. Dies kann soweit gehen, daß diese Flaschen nur für das Füllgut wiederverwendet werden dürfen, das beim ersten Umlauf in die Verpackung eingefüllt worden war. Entsprechendes kann auch für Verpackungen gelten, die aus mehreren Kunststoffen bestehen, da im Falle einer Wiederverarbeitung ein Kunststoffgemisch entsteht, das unter Umständen nicht mit allen Füllgütern kompatibel oder ggf. auch für andere Arten der Benutzung nicht eingesetzt werden kann.

Der größte Teil der heute verwendeten Verpackungen ist dekoriert, also bedruckt oder mit Etiketten versehen. Das Verfahren gemäß der Erfindung bietet die Möglichkeit, insbesondere bei Verwendung von lumineszierenden Substanzen, die von diesen gebildeten Markierungen als Schicht oder Muster ausschließlich oder zusätzlich auf den Bereichen der Verpackung anzubringen, die mit einem Aufdruck oder einem Etikett versehen sind. Lesbarkeit und Aussehen von Aufdruck und/oder Etikett würden durch die die lumineszierenden Substanzen aufnehmende Schicht nicht beeinträchtigt, solange diese Schicht aus einem durchsichtigen Material besteht. Dies kann ohne weiteres erreicht werden, zumal, wie bereits erläutert, die Schicht mit einer außerordentlich geringen Stärke aufgetragen werden kann und ·die darin verteilten lumineszierenden Substanzen einen so geringen Anteil an der Schicht bilden, daß sie ebenfalls das Aussehen nicht beeinträchtigen. Bei Verwendung von lumineszierenden Substanzen kommt der Schicht unabhängig davon, ob sie durchgehend oder als ein mit Unterbrechungen versehenes Muster ausgebildet ist, normalerweise ohnehin nur eine Tragfunktion für die lumineszierenden Partikel zu.

Die Erfindung ist auch dann anwendbar, wenn die Verpackungen beschädigt oder ggf. sogar zerstört sind, so daß nur Bruchstücke der Verpackung identifizierbar sind. Aufgrund der mehr oder weniger die gesamte Oberfläche erfassenden Anbringung der Kennzeichnung wäre auch unter diesen Umständen eine Gewähr dafür gegeben, daß diese Bruchstücke erfaßt und identifiziert werden könnten. Im allgemeinen gilt, daß die Kennzeichnung insbesondere bei Verwendung von Mustern oder Zeichen so gestaltet werden kann, daß auch bei nur teilweise sichtbarer Oberfläche oder bei Vorhandensein lediglich von Bruchstücken eine einwandfreie Identifizierung möglich ist. Schwierigkeiten könnten ggf. bei Verpackungen entstehen, die so verschmutzt sind, daß überhaupt keine Oberfläche mehr sichtbar ist. Derart verschmutzte Verpackungen werden jedoch eher die Ausnahme sein, so daß die Anwendbarkeit der Erfindung durch Vorhandensein derart verschmutzter Flaschen nicht in Frage gestellt ist. Bei teilweise verschmutzten Flaschen besteht ohne weiteres die Möglichkeit der Identifizierung, da gemäß der genannten Voraussetzung die Kennzeichnung zumindest auf dem größten Teil der sichtbaren Oberfläche der Verpackung angebracht sein soll. Im übrigen bestünde auch die Möglichkeit, die Verpackungen zunächst einer Reinigung zu unterziehen, bevor sie identifiziert werden. Da durch eine derartige Reinigung lediglich der grobe, die Kennzeichnung abdeckende Schmutz entfernt werden soll, sind an deren Durchführung keine hohen Anforderungen zu stellen, so daß auch die dadurch entstehenden Mehrkosten nicht ins Gewicht fallen.

Die praktische Anwendung der Erfindung setzt natürlich voraus, daß von allen Verpackungsherstellern eine einheitliche Kennzeichnung bzw. Codierung verwendet wird. Dies bereitet jedoch keine Schwierigkeiten, da dazu lediglich eine Vereinbarung nach Art einer Normung erforderlich wäre.

## Ansprüche

1. Verfahren zum Identifizieren von Verpackungen und/oder wenigstens eines zu ihrer Herstellung verwendeten Werkstoffs, dadurch gekennzeichnet, daß die Verpackung mit wenigstens einer ihr und/oder einem bestimmten Werkstoff oder einer Kombination von Werkstoffen zugeordneten Kennzeichnung versehen wird, die unter normalen Bedingungen nicht wahrnehmbar ist, jedoch durch Einwirkung physikalischer und/oder chemischer Mittel erkennbar gemacht werden kann und auf den von außen zugänglichen Bereichen der Verpackung so aufgebracht wird, daß unabhängig von der Position, die die Verpackung im Einwirkungsbereich der physikalischen und/oder chemischen Mittel und/oder im Kontrollbereich eines Geräts zur Identifizierung relativ zu diesen einnimmt, wenigstens ein Teilbereich der Kennzeichnung von den physikalischen und/oder chemischen Mitteln beaufschlagt bzw. vom Gerät zum Identifizieren erfaßt und durch die Einwirkung der physikalischen und/oder chemischen Mittel eine von außen wahrnehmbare Änderung des Aussehens der Verpackung bewirkt wird, anhand welcher die Verpackung und/oder wenigstens ein die Verpackung zumindest teilweise bildendes Material identifizierbar ist.

2. Verfahren nach einem der vorhergehenden Ansprüche, dadurch gekennzeichnet, daß die zur Kennzeichnung der Verpackung dienenden Mittel in wenigstens einer außenseitigen Schicht angeordnet sind.

3. Verfahren nach Anspruch 1, dadurch gekennzeichnet, daß die zur Kennzeichnung der Verpackung dienenden Mittel aus wenigstens einer außenseitigen Schicht bestehen.

4. Verfahren nach Anspruch 1, dadurch gekennzeichnet, daß die wenigstens eine Schicht die Verpackung zumindest teilweise umhüllt.

5. Verfahren nach Anspruch 1, dadurch gekennzeichnet, daß die wenigstens eine Schicht zur Bildung von Mustern und/oder Zeichen auf der Verpackung mit Unterbrechungen aufgetragen wird.

6. Verfahren nach einem der vorhergehenden Ansprüche, dadurch gekennzeichnet, daß die Schicht aus durchsichtigem oder durchscheinendem Material aufgetragen wird.

7. Verfahren nach Anspruch 1, dadurch gekennzeichnet, daß zur Herstellung der Kennzeichnung lumineszierende Substanzen auf der von außen zugänglichen Oberfläche der Verpackung aufgebracht werden, die unter der Einwirkung von Strahlen mit geeigneter Wellenlänge eine Änderung des Aussehens der Verpackung bewirken.

8. Verfahren nach Anspruch 1, dadurch gekennzeichnet, daß zur Herstellung der Kennzeichnung Substanzen auf den von außen zugänglichen Oberflächen der Verpackung aufgebracht werden, die unter der Einwirkung von chemisch wirksamen Substanzen umgesetzt werden und so eine Änderung des Aussehens der Verpackung bewirken.

9. Verpackung, dadurch gekennzeichnet, daß sie an ihrer von außen zugänglichen Oberfläche mit einer aus wenigstens einer Substanz bestehenden Kennzeichnung versehen ist, die unter normalen Bedingungen nicht wahrnehmbar ist, jedoch durch Einwirkung physikalischer und/oder chemischer Mittel wahrnehmbar gemacht werden kann, und diese Kennzeichnung zur Identifizierung der Verpackung und/oder wenigstens eines Materials oder einer Materialkombination dient, das bzw. die zumindest Teile der Verpackung bildet.

10. Verpackung nach Anspruch 9, dadurch gekennzeichnet, daß die die Kennzeichnung der Verpackung bewirkende Substanz eine die Verpackung zumindest teilweise umhüllende zusätzliche Schicht ist.

11. Verpackung nach Anspruch 9, dadurch gekennzeichnet, daß die Substanz zur Kennzeichnung einer die Verpackung zumindest teilweise umhüllenden Schicht beigemischt ist.

12. Verpackung nach Anspruch 9, dadurch gekennzeichnet, daß die die Kennzeichnung bewirkende Substanz bzw. Schicht auf der Verpackung in Form von Mustern und/oder Zeichen aufgebracht ist, welche die Oberfläche der Verpackung nur teilweise abdeckt.

13. Verpackung nach Anspruch 12, dadurch gekennzeichnet, daß die Kennzeichnung durch Muster und/oder Zeichen so gebildet ist und/oder die Muster und/oder Zeichen so zahlreich sind, daß auch bei nur teilweise sichtbarer Oberfläche oder bei Vorliegen nur eines Bruchstückes der Verpackung eine einwandfreie Identifizierung möglich ist.

14. Verpackung nach Anspruch 9, dadurch gekennzeichnet, daß die die Kennzeichnung bewirkende Schicht aus einem durchsichtigen oder durchscheinendem Werkstoff besteht.

15. Verpackung nach Anspruch 9, dadurch gekennzeichnet, daß die die Kennzeichnung der Verpackung bildende wenigstens eine Substanz lumineszierende Eigenschaften aufweist und unter der Einwirkung von Strahlen mit geeigneter Wellenlänge eine Veränderung des Aussehens der Verpak-

kung bewirkt.

16. Verpackung nach Anspruch 9, dadurch gekennzeichnet, daß die die Kennzeichnung der Pakkung bildende wenigstens eine Substanz durch Einwirken entsprechender chemischer Mittel eine Umsetzung erfährt, die zu einer Veränderung des Aussehens der Verpackung führt.

17. Verpackung nach Anspruch 9, dadurch gekennzeichnet, daß die der Kennzeichnung dienende Schicht ganz oder überwiegend aus wenigstens einem Material besteht, aus welchem die mit der Schicht zu versehende Verpackung besteht.